# EUROPÄISCHE PATENTSCHRIFT

(11) **EP 2 217 824 B1**
(45) Veröffentlichungstag und Bekanntmachung des Hinweises auf die Patenterteilung: **07.09.2011**
(21) Anmeldenummer: 08841618.5
(22) Anmeldetag: 23.10.2008
(51) Int. Cl.: F16D 55/08

(54) **KOLBEN FÜR EINEN BREMSSATTEL EINER SCHEIBENBREMSE**
PISTON FOR A BRAKE CALIPER OF A DISC BRAKE
PISTON POUR UN ÉTRIER DE FREIN À DISQUE

(30) Priorität: 27.10.2007 DE 102007051456
(43) Veröffentlichungstag der Anmeldung: 18.08.2010
(73) Patentinhaber: Continental Teves AG & Co. oHG, 60488 Frankfurt (DE); Erdrich Beteiligungs GmbH, 77871 Renchen-Ulm (DE)
(72) Erfinder: KOCH, Dirk, 35457 Lollar-Odenhausen (DE); BAUER, Herwig, 61118 Bad Vilbel (DE); ZEIBIG, Uwe, 77855 Achern (DE); KLIMT, Anja, 60488 Frankfurt (DE); WINKLER, Thomas, 55122 Mainz (DE)
(86) Internationale Anmeldenummer: PCT/EP2008/064348
(87) Internationale Veröffentlichungsnummer: WO 2009/053425

(56) Entgegenhaltungen:
- WO-A-93/00524
- WO-A-2007/036357
- US-A- 3 688 875
- US-A- 5 219 047

## Beschreibung

Die Erfindung betrifft einen Kolben mit den Merkmalen laut Oberbegriff der unabhängigen Patentansprüche.

Ein solcher Kolben verfügt über Krafteinleitung im Bereich einer Kolbenwandung und ist aus der US 3,688,875 bekannt.

Es ist eine Aufgabe der Erfindung, einen Kolben anzugeben, der die Nachteile des Stands der Technik vermeidet, und dabei insbesondere eine gewichts- und fertigungsoptimierte Konstruktion umfasst.

Die Aufgabe wird erfindungsgemäß mit den Merkmalen des Kennzeichens der Patentansprüche 1 und 6 gelöst. Dabei wirkt sich die Abstützung im Kolbenboden positiv auf den Kraftfluss bei einer mechanischen Betätigung einer Scheibenbremse aus.

Eine besonders günstige Ausprägung der Erfindung beinhaltet, dass die Konusfläche auf dem Vorsprung an der Kolbeninnenfläche hergestellt wird, indem in den anfänglich noch ebenen Kolbenboden von Außen her die Ausnehmung mittels eines Stempels eingeformt wird, wodurch auf der Innenfläche des Kolbens der Vorsprung parallel hervortritt. Um eine definiertere Konusfläche an dem Vorsprung zu erhalten, wird zusätzlich zum Stempel beim Einformen der Ausnehmung in die Außenseite an der Innenfläche des Kolbens eine Matrize gegen gehalten, die eine Negativform des Vorsprungs und der Konusfläche aufweist.

Weiterhin kann es im Rahmen der Erfindung liegen, dass zwischen dem Vorsprung im Kolbenboden und der Wandung des Kolbens ein Spalt vorhanden ist. Dieser Spalt kann von unterschiedlicher Größe sein, wobei bei Kolben mit kleinem Durchmesser der Spalt eher als Faltung ausgeprägt ist, wogegen bei größeren Kolbendurchmessern ein spaltförmiges Volumen vorhanden ist. Dieser Spalt, oder Faltung, ist ein Merkmal der Erfindung, welches erstmals ermöglicht, dass zur Ausbildung der Konusfläche zur mechanischen Betätigung eines Kolbens eines Bremssattels keine nachteilige Verdickung mehr notwendig ist, wie bisher im Stand der Technik angegeben.

Als weiteres sinnvolles Detail ist im Rahmen der Erfindung anzuführen, dass die Ausnehmung des Kolbenbodens in die Anlagefläche übergeht, und dass die Anlagefläche größer ist als eine Querschnittsfläche an der dünnsten Stelle der Wandung des Kolbens.

Eine nebengeordnete vorteilhafte Lösung betrifft einen Kolben wobei die Konusfläche an einem dünnwandigen Napf vorgesehen ist, der zweistückig mit dem Kolben ausgebildet ist. In alternativer Weise wird hierbei die verdickte Materialanhäufung des Stands der Technik vermieden.

Der Napf ist wie der Kolbentopf aus einem metallischen Werkstoff, insbesondere aus einem ebenen Blech, hergestellt werden.

Indem der Napf abdichtend mit der Wandung des Kolbens verbunden ist, wird ein geringes Totvolumen des Kolbens erreicht, da nur relativ wenig Hydraulikfluid im Inneren des Kolbens Platz finden kann. Die dichte Verbindung zwischen dem Kolben und dem Napf kann mittels eines Lasers geschweißt sein, jedoch sind auch andere Verbindungsformen denkbar, wie zum Beispiel Reibschweißen. Die Reduzierung des Totvolumens im Kolben, und damit auch im Bremssattel, bewirkt eine Erhöhung der hydraulischen Steifigkeit im Bremssystem, und damit ein verbessertes hydraulisches Verhalten.

Wesentlich für beide Lösungen der Aufgabe der Erfindung ist, dass eine einfache, werkstoffsparende und herstellungsoptimierte Abstützung der Konusfläche im Kolbenboden dargestellt wird. Unabhängig davon, ob die Konusfläche an dem separaten Napf oder an dem Vorsprung im Kolbenboden dargestellt wird, ist die Konusfläche günstig ausgeprägt, wenn die Konusfläche in Axialrichtung mit der Längsache des Kobens einen Winkel α von 30° bis 75° Grad einschließt. In diesem Winkelbereich erfüllt die Konusfläche im Zusammenwirken mit der Antriebsmutter des Bremssattels eine Doppelfunktion als Kupplungs- und Zentriermittel. Besonders günstig ist es, wenn der Winkel α im Wesentlichen 60° Grad beträgt.

Weiterhin ist zumindest zwischen der Antriebsmutter und am Kolben eine formschlüssige Verdrehsicherung wirksam angeordnet. Die Verdrehsicherung ist an einem offenen Ende des Kolbens einstückig mit dem Kolben ausgebildet. Dazu kann während der Herstellung des Kolbens oder nach der Ausformung des Kolbentopfes der Rand der Wandung an der offenen Seite des Kolbens nach Innen, hin zur Längsachse des Kolbens, umgeformt werden. Dadurch bildet sich eine axiale Stirnfläche aus, in welche eine Kontur eingebracht werden kann. Da an der Antriebsmutter dabei eine komplementäre Kontur vorgesehen ist, sind Kolben und Antriebsmutter über die Kontur in der Stirnfläche formschlüssig bezüglich auf die Längsachse des Kolbens miteinander drehfest verbunden und gegeneinander verdrehgesichert.

Weitere Einzelheiten der Erfindung gehen aus den Zeichnungen anhand der Beschreibung hervor.

In den Zeichnungen zeigt
- Fig. 1: eine erste Ausführungsform eines Kolbens zusammen mit einer Antriebsmutter und einer Antriebsspindel,
- Fig. 2: einen vergrößerten Ausschnitt des Kolbens aus Fig. 1,
- Fig. 3: eine perspektivische Ansicht auf das offene Ende des Kolben,
- Fig. 4: eine zweite Ausführungsform eines Kolbens, und
- Fig. 5: eine perspektivische Ansicht des Einsatzteils gemäß Fig. 4.

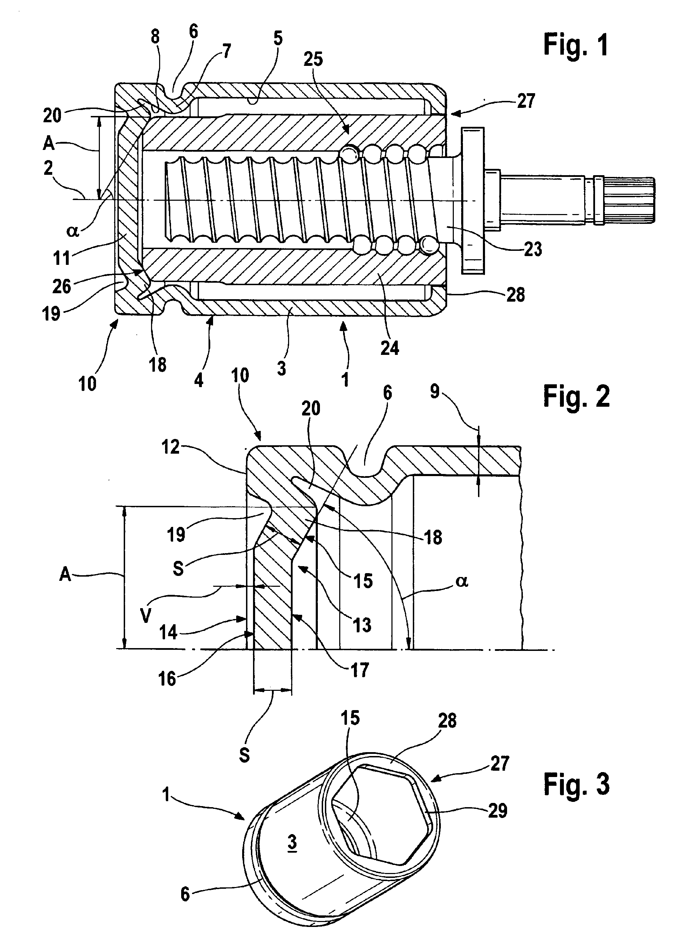

In Fig. 1 ist ein Kolben 1 mit einer Antriebsspindel 23 und einer Antriebsmutter 24 im Längsschnitt dargestellt. Der um eine Längsachse 2 rotationssymetrisch ausgeführte Kolben 1 ist als einseitig offener Topf mit einer Wandung 3 und einem Kolbenboden 11 gestaltet, wobei der Kolbenboden 11 auf der geschlossenen Seite des Kolbens 1 mit einer axialen Anlagefläche 12 an einen nicht dargestellten Bremsbelag anlegbar ist. Die Anlagefläche 12 ist größer als eine Querschnittsfläche 9 an der schwächsten Stelle der Wandung 3. Zudem ist in einer Außenseite 4 der Wandung 3 in der Nähe der Anlagefläche 12 eine umlaufende Nut 6 einrolliert, welche im verbauten Zustand im Bremssattel zur Aufnahme einer nicht dargestellten Kolbenschutzkappe dient. Die Kontur der einrollierten Nut 6 setzt sich durch den gesamten Querschnitt der Wandung 3 fort und verursacht so auf einer Innenseite 5 der Wandung 3 des Kolbens 1 eine Schulter 7.

An einer Innenfläche 13 des Kolbenbodens 11 ist ein Vorsprung 18 mit einer Konusfläche 15 angeordnet, an welche die Antriebsmutter 24 anlegbar ist. Die Konusfläche 15 schließt dabei in axialer Richtung mit der Längsachse 2 vorzugsweise einen Winkel α von etwa 60° Grad ein, wodurch eine zentrierte und definierte Anlage der Antriebsmutter 24 gewährleistet wird.

Der Kolben 1 und die Antriebsmutter 24 sind bezüglich der Längsachse 2 drehfest miteinander verbunden und in axialer Richtung gegeneinander verschiebbar gehalten. Der Kolben 1 oder die Antriebsmutter 24 werden in nicht dargestellter Weise in dem Bremssattelgehäuse gegen Verdrehen gesichert. Wie in Fig. 3 gezeigt, ist die Verdrehsicherung 27 zwischen dem Kolben 1 und der Antriebsmutter 24 derart realisiert, dass an dem offenen Ende des Kolbens 1 eine Stirnfläche 28 mit einer Kontur 29 einstückig vorgesehen ist, welche zusammen mit einer komplementären Kontur auf der Antriebsmutter 24 die formschlüssige Verdrehsicherung 27 bildet.

Bei einer mechanischen Betätigung der Scheibenbremse wird die in der Antriebsmutter 24 angeordnete Antriebsspindel 23 gedreht, zum Beispiel mittels eines Elektromotors mit einem nachgeschalteten Getriebe. Da die Antriebsspindel 23 und die Antriebsmutter 24 mit einem Kugelgewinde 25 versehen sind, wird die Rotationsbewegung der Antriebsspindel 23 über das Kugelgewinde 25 in eine axiale Verschiebung der Antriebsmutter 24 umgewandelt. Diese legt sich mit einer zur Konusfläche 15 komplementären Kegelfläche 26 an den Kolben 1 an und verschiebt diesen.

Anhand Fig. 2 wird mittels einer Vergrößerung die geometrische Ausprägung des Übergangsbereichs 10 zwischen Wandung 3 und Kolbenbodenll verdeutlicht. Der Kolbenboden 11 umfasst in seiner Außenfläche 14 eine Ausnehmung 19 und an seiner Innenfläche 13 den Vorsprung 18, die rotationssymetrisch ringförmig um die Längsachse 2 ausgebildet sind. Die Ausnehmung 19 wird durch Umformen von außen in den Kolbenboden 11 eingeformt, wodurch an der Innenfläche 13 des Kolbenbodens 11 der Vorsprung 18 parallel hervortritt. Die Ausnehmung 19 weist im Wesentlichen einen gleichen Abstand A von der Längsachse 2 des Kolbens 1 auf, wie der Vorsprung 18 von der Längsachse 2.

Ausgehend von der Längsachse 2 des Kolbens 1 ist der Kolbenboden 11 durch eine plane, äußere und innere Bodenfläche 16,17 beschrieben, welche beide im Wesentlichen senkrecht zur Längsachse 2 verlaufen. Die äußere Bodenfläche 16 ist im Verhältnis zum axialen Maximalmaß des Kolbens 1 mit einem leichten axialen Versatz V ausgebildet, wodurch dieser Bereich des Kolbens 1 nicht an einen nicht dargestellten Bremsbelag anlegbar ist. Die plane, äußere Bodenfläche 16 geht in die ringförmige Ausnehmung 19 über, die im Längsschnitt eine abgerundet dreiecksförmige Kontur aufweist. Die innere plane Bodenfläche 17 mündet in den ringförmigen Vorsprung 18, der sich im Wesentlichen parallel zur Ausnehmung 19 aus dem Kolbenboden 11 erhebt und dabei die Konusfläche 15 trägt. Dabei ist der Vorsprung 18 derart näher an der Längsachse 2 als die Ausnehmung 19 ausgebildet, dass eine im Wesentlichen konstante Wandstärke S im Kolbenboden 11 ermöglicht wird. Wie auch die Ausnehmung 19, zeigt der Vorsprung 18 eine abgerundet dreiecksförmige Kontur.

Weiterhin ausgehend von der Längsachse 2 bilden sich sowohl die Ausnehmung 19 als auch der Vorsprung 18 in Axialrichtung zurück, wobei die Ausnehmung 19 direkt in die Anlagefläche 12 übergeht. Der Vorsprung 18 an der Innenfläche 13 des Kolbenbodens 11 bildet zusammen mit der Schulter 7 an der Innenseite 5 der Wandung 3 einen faltungsbedingten Spalt 20 aus, der es ermöglicht, ohne eine Verdickung im Übergangsbereich 10 die Konusfläche 15 zur Anlage einer Antriebsmutter 24 darzustellen. In Abhängigkeit von der Größe des Kolbendurchmessers fällt der Spalt 20 bei kleinen Durchmessern eher als quasi-volumenfreie Faltung, oder aber bei großen Durchmessern als ein spaltförmiges Volumen aus. Weiterhin kann die dem Kolbenboden 11 zugewandte innere Schulterfläche 8 als Schräge ausgebildet sein.

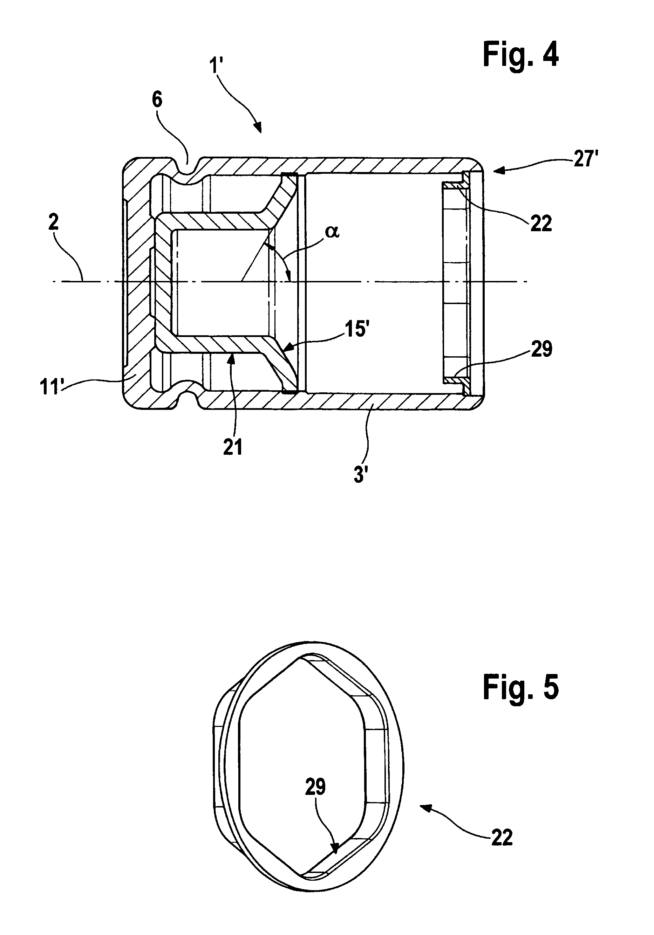

In Fig. 4 ist eine Ausführungsform einer nebengeordneten Lösung der Aufgabe der Erfindung dargestellt. Dabei weist der Kolbenboden 11' des Kolbens 1' keinen Vorsprung auf, sondern bildet die Konusfläche 15' zum Anlegen einer Antriebsspindel an einem Napf 21 aus, der zweistückig als eigenes Bauteil im Kolben 1' angeordnet und durch Umformen aus einem ebenen Blech hergestellt ist. Dieser Napf 21 stützt sich axial an dem Kolbenboden 11' ab, und ist abdichtend mit der Wandung 3' des Kolbens 1' verbunden. Dies bewirkt, dass das Totvolumen des Kolbens 1' verringert wird, wobei die dichte Verbindung zwischen dem Napf 21 und der Wandung 3' mittels Laser- oder Reibschweißen umgesetzt ist. Die Konusfläche 15' des Napfs 21 schließt dabei in axialer Richtung mit der Längsachse 2 vorzugsweise einen Winkel α von etwa 60° Grad ein.

Anhand dieses Ausführungsbeispiels der nebengeordneten Lösung soll auch eine weitere Ausführungsmöglichkeit einer Verdrehsicherung 27' zwischen der Antriebsmutter und dem Kolben 1' gezeigt werden, die nicht auf das vorliegende Ausführungsbeispiel beschränkt sein soll. Dabei ist ein Einsatzteil 22 vorgesehen, welches drehfest mit der Wandung 3' verbunden ist, beispielsweise durch Verpressen. Dieses Einsatzteil 33 trägt die Kontur 29, welche mit einer komplementären Kontur der Antriebsmutter die formschlüssige Verdrehsicherung 27' ausbildet. Die Kontur 29 kann in Form eines abgerundeten Sechsecks dargestellt sein.

### Bezugszeichenliste

| | | | |
|---|---|---|---|
| 1 | Kolben | 15 | Konusfläche |
| | | 15' | Konusfläche |
| 1' | Kolben | 16 | Bodenfläche |
| 2 | Längsachse | 17 | Bodenfläche |
| 3 | Wandung | 18 | Vorsprung |
| 3' | Wandung | 19 | Ausnehmung |
| 4 | Außenseite | 20 | Spalt |
| 5 | Innenseite | 21 | Napf |
| 6 | Nut | 22 | Einsatzteil |
| 7 | Schulter | 23 | Antriebsspindel |
| 8 | Schulterfläche | 24 | Antriebsmutter |
| 9 | Querschnittsfläche | 25 | Kugelgewinde |
| 10 | Übergangsbereichs | 26 | Kegelfläche |
| 11 | Kolbenboden | 27 | Verdrehsicherung |
| 11' | Kolbenboden | 27' | Verdrehsicherung |
| 12 | Anlagefläche | 28 | Stirnfläche |
| 13 | Innenfläche | 29 | Kontur |
| 14 | Außenfläche | | |
| A | Abstand | | |
| S | Wandstärke der Wandung | | |
| V | Versatz | | |
| α | Winkel | | |

## Patentansprüche

1. Kolben (1) für einen Bremssattel einer Scheibenbremse der als einseitig offener Topf mit einer Längsachse (2), mit einer Wandung (3) und mit einem Kolbenboden (11) ausgebildet ist, und im Bereich des Kolbenbodens (11) eine Anlagefläche (12) aufweist, und wobei in einer Außenfläche (14) des Kolbenbodens (11) eine Ausnehmung (19) vorgesehen ist, die im Wesentlichen einen gleichen Abstand (A) von der Längsachse (2) aufweist, wie ein Vorsprung (18) auf einer Innenfläche (13), und umfassend eine Konusfläche (15) zum Anlegen einer Antriebsmutter (24), **dadurch gekennzeichnet, dass** der Vorsprung (18) durch Umformung vom Kolbenboden (11) als Konusfläche (15) vorgesehen ist, und wobei der Kolben (1) in Umformprozessen aus einem ebenen, metallischen Blechwerkstoff hergestellt ist.

2. Kolben (1) nach Anspruch 1, **dadurch gekennzeichnet, dass** der Kolbenboden (11) im Bereich der Konusfläche (15) eine im Wesentlichen konstante Wandstärke (S) aufweist.

3. Kolben (1) nach einem oder mehreren der voran gestellten Ansprüche, **dadurch gekennzeichnet, dass** zwischen dem Vorsprung (18) und der Wandung (3) ein Spalt (20) vorhanden ist.

4. Kolben (1) nach einem oder mehreren der voran gestellten Ansprüche, **dadurch gekennzeichnet, dass** die Ausnehmung (19) in die Anlagefläche (12) übergeht.

5. Kolben (1) nach einem oder mehreren der voran gestellten Ansprüche, **dadurch gekennzeichnet, dass** die Anlagefläche (12) größer ist als eine Querschnittsfläche (9) an der dünnsten Stelle der Wandung (3).

6. Kolben (1') für einen Bremssattel einer Scheibenbremse der als einseitig offener Topf mit einer Längsachse (2), mit einer Wandung (3') und mit einem Kolbenboden (11') einstückig ausgebildet ist, und im Bereich des Kolbenbodens (11') eine Anlagefläche (12) aufweist,
wobei an einer Innenseite (5) der Wandung (3) ein eigenes Bauteil mit einer Konusfläche (15') zum Anlegen einer Antriebsmutter (24) vorgesehen ist, und mit einer Verdrehsicherung (27), **dadurch gekennzeichnet, dass** der Kolben (i) und das Bauteil mit der Konusfläche (15') durch Umformprozesse aus einem ebenen, metallischen Blechwerkstoff hergestellt ist, und das Bauteil am Kolbenboden (11') abgestützt ist.

7. Kolben (1') nach Anspruch 6, **dadurch gekennzeichnet, dass** die Verdrehsicherung (27) am offenen Ende des Kolbens (1') einstückig mit dem Kolben (1') zwischen Antriebsmutter (24) und Kolben (1') ausgebildet ist.

8. Kolben (1') nach Anspruch 7, **dadurch gekennzeichnet, dass** die Verdrehsicherung (27) formschlüssig als nach radial innen, hin zur Längsachse (2) umgeformter Rand der Wandung (3) ausgebildet ist, welcher eine axiale Stirnfläche (28) aufweist.

9. Kolben (1') nach Anspruch 8, **dadurch gekennzeichnet, dass** zur Ausbildung der Verdrehsicherung (27) zwischen Stirnfläche (28) und Antriebsmutter (24) komplementäre Konturen (29) vorgesehen sind.

10. Kolben (1')nach Anspruch 6, **dadurch gekennzeichnet, dass** das Bauteil mit der Konusfläche (15') als dünnwandiger Napf (21) vorgesehen ist, der zweistückig mit dem Kolben (1') ausgebildet ist.

11. Kolben (1') nach Anspruch 10, **dadurch gekennzeichnet, dass** der Napf (21) abdichtend mit der Wandung (3') verbunden ist.

12. Kolben (1,1') nach einem oder mehreren der voran gestellten Ansprüche, **dadurch gekennzeichnet, dass** die Konusfläche (15,15') mit der Längsache (2) einen Winkel (α) von 30° bis 75° einschließt.

13. Kolben (1,1') nach Anspruch 12, **dadurch gekennzeichnet, dass** der Winkel (α) 60° beträgt.

## Claims

1. Piston (1) for a brake calliper of a disc brake, said piston being designed as a pot which is open on one side and has a longitudinal axis (2), with a wall (3) and with a piston head (11), and having a contact surface (12) in the region of the piston head (11), and wherein a recess (19) is provided in an outer surface (14) of the piston head (11), said recess being at substantially an identical distance (A) from the longitudinal axis (2) as a projection (18) on an inner surface (13), said piston comprising a conical surface (15) for the application of a driving nut (24), **characterized in that** the projection (18) is provided as a conical surface (15) by deformation of the piston head (11), and the piston (1) being produced from a flat metallic sheet-metal material in deformation processes.

2. Piston (1) according to Claim 1, **characterized in that** the piston head (11) has a substantially constant wall thickness (S) in the region of the conical surface (15).

3. Piston (1) according to one or more of the preceding claims, **characterized in that** there is a gap (20) between the projection (18) and the wall (3).

4. Piston (1) according to one or more of the preceding claims, **characterized in that** the recess (19) merges into the contact surface (12).

5. Piston (1) according to one or more of the preceding claims, **characterized in that** the contact surface (12) is larger than a cross-sectional area (9) at the thinnest point of the wall (3).

6. Piston (1') for a brake calliper of a disc brake, said piston being designed integrally as a pot which is open on one side and has a longitudinal axis (2), with a wall (3') and with a piston head (11'), and having a contact surface (12) in the region of the piston head (11'), wherein a dedicated component with a conical surface (15') for the application of a driving nut (24) is provided on an inner side (5) of the wall (3'), and with a means of securing against rotation (27), **characterized in that** the piston (1') and the component with the conical surface (15') are produced from a flat metallic sheet-metal material by deformation processes, and the component is supported on the piston head (11').

7. Piston (1') according to Claim 6, **characterized in that** the means for securing against rotation (27) is formed integrally with the piston (1') at the open end of the piston (1') between the driving nut (24) and piston (1').

8. Piston (1') according to Claim 7, **characterized in that** the means for securing against rotation (27) is designed in a form-fitting manner as an edge of the wall (3), which edge is deformed radially inwards towards the longitudinal axis (2) and has an axial end surface (28).

9. Piston (1') according to Claim 8, **characterized in that** complementary contours (29) are provided between the end surface (28) and driving nut (24) in order to form the means for securing against rotation (27).

10. Piston (1') according to Claim 6, **characterized in that** the component with the conical surface (15') is provided as a thin-walled cup (21) which is formed in two pieces with the piston (1').

11. Piston (1') according to Claim 10, **characterized in that** the cup (21) is connected in a sealing manner to the wall (3').

12. Piston (1, 1') according to one or more of the preceding claims, **characterized in that** the conical surface (15, 15') encloses an angle (α) of 30° to 75° with the longitudinal axis (2).

13. Piston (1, 1') according to Claim 12, **characterized in that** the angle (α) is 60°.

## Revendications

1. Piston (1) pour un étrier de frein d'un frein à disque, qui est réalisé sous forme de pot ouvert d'un côté avec un axe longitudinal (2), avec une paroi (3) et avec un fond de piston (11), et qui présente dans la région du fond de piston (11) une surface d'appui (12), un évidement (19) étant prévu dans une surface extérieure (14) du fond de piston (11), lequel présente essentiellement une même distance (A) à l'axe longitudinal (2) qu'une saillie (18) sur une surface intérieure (13), et comprenant une surface conique (15) pour l'application d'un écrou d'entraînement (24), **caractérisé en ce que** la saillie (18) est prévue par façonnage du fond de piston (11) en forme de surface conique (15), et le piston (1) est fabriqué par des processus de façonnage à partir d'un matériau en tôle métallique plan.

2. Piston (1) selon la revendication 1, **caractérisé en ce que** le fond de piston (11) présente dans la région de la surface conique (15) une épaisseur de paroi (S) essentiellement constante.

3. Piston (1) selon l'une quelconque ou plusieurs des revendications précédentes, **caractérisé en ce qu'**un interstice (20) est prévu entre la saillie (18) et la paroi (3).

4. Piston (1) selon l'une quelconque ou plusieurs des revendications précédentes, **caractérisé en ce que** l'évidement (19) se prolonge dans la surface d'appui (12).

5. Piston (1) selon l'une quelconque ou plusieurs des revendications précédentes, **caractérisé en ce que** la surface d'appui (12) est supérieure à une surface en section transversale (9) à l'emplacement le plus étroit de la paroi (3).

6. Piston (1') pour un étrier de frein d'un frein à disque, qui est réalisé d'une seule pièce sous forme de pot ouvert d'un côté avec un axe longitudinal (2), avec une paroi (3') et avec un fond de piston (11'), et qui présente dans la région du fond de piston (11') une surface d'appui (12), un composant propre avec une surface conique (15') pour l'application d'un écrou d'entraînement (24) étant prévu sur un côté intérieur (5) de la paroi (3') et comprenant une fixation contre la rotation (27), **caractérisé en ce que** le piston (1') et le composant avec la surface conique (15') sont fabriqués par des processus de façonnage à partir d'un matériau en tôle métallique plan, et le composant est supporté sur le fond de piston (11').

7. Piston (1') selon la revendication 6, **caractérisé en ce que** la fixation contre la rotation (27) est réalisée à l'extrémité ouverte du piston (1') d'une seule pièce avec le piston (1') entre l'écrou d'entraînement (24) et le piston (1').

8. Piston (1') selon la revendication 7, **caractérisé en ce que** la fixation contre la rotation (27) est réalisée par engagement par correspondance géométrique sous forme de bord de la paroi (3) façonné radialement vers l'intérieur vers l'axe longitudinal (2), qui présente une surface frontale axiale (28).

9. Piston (1') selon la revendication 8, **caractérisé en ce que** pour la réalisation de la fixation contre la rotation (27), on prévoit entre la surface frontale (28) et l'écrou d'entraînement (24) des contours complémentaires (29).

10. Piston (1') selon la revendication 6, **caractérisé en ce que** le composant avec la surface conique (15') est prévu sous forme de coupelle (21) à paroi mince, qui est réalisée en deux parties avec le piston (1').

11. Piston (1') selon la revendication 10, **caractérisé en ce que** la coupelle (21) est connectée de manière hermétique à la paroi (3').

12. Piston (1, 1') selon l'une quelconque ou plusieurs des revendications précédentes, **caractérisé en ce que** la surface conique (15, 15') forme avec l'axe longitudinal (2) un angle (α) de 30° à 75°.

13. Piston (1, 1') selon la revendication 12, **caractérisé en ce que** l'angle (α) vaut 60°.
